Europäisches Patentamt

European Patent Office

Office européen des brevets

(11) Veröffentlichungsnummer: **0 106 010**
**A1**

(12) # EUROPÄISCHE PATENTANMELDUNG

(21) Anmeldenummer: **83104877.2**

(51) Int. Cl.³: **G 01 P 5/07**

(22) Anmeldetag: **18.05.83**

(30) Priorität: **16.10.82 DE 3238433**

(43) Veröffentlichungstag der Anmeldung: **25.04.84**
**Patentblatt 84/17**

(84) Benannte Vertragsstaaten: **FR GB IT NL SE**

(71) Anmelder: **VDO Adolf Schindling AG, Gräfstrasse 103, D-6000 Frankfurt/Main (DE)**

(72) Erfinder: **Hufnagel, Walter, Idsteiner Weg 34, D-6246 Glashütten 1 (DE)**
Erfinder: **Kreuz, Alois, Hans-Meissner-Strasse 1, D-6384 Schmitten 3 (DE)**

(74) Vertreter: **Könekamp, Herbert, Dipl.-Ing., Sodener Strasse 9, D-6231 Schwalbach (DE)**

(54) **Geschwindigkeitsmesser.**

(57) Die Erfindung betrifft einen Geschwindigkeitsmesser für Wasserfahrzeuge, der einen Schaufelradgeber besitzt, dessen auf einer Achse 3 drehbar gelagertes Schaufelrad 1 zu einer Hälfte der Wasserströmung ausgesetzt ist. Um eine hohe Meßgenauigkeit zu erreichen, sind die Schaufeln 19, 19' des Schaufelrades 1 an ihrer Abströmseite 26 mit einem konvexen stromlinienförmigen Tragflügelprofil ausgebildet.

EP 0 106 010 A1

VDO Adolf Schindling AG        Gräfstraße 103
                               6000 Frankfurt/Main
                               G-S Kl-kl / V 1944
                               13. Okt. 1982

## Geschwindigkeitsmesser

Die Erfindung bezieht sich auf einen Geschwindigkeitsmesser für Wasserfahrzeuge, mit einem Schaufelradgeber, dessen auf einer Achse drehbar gelagertes
Schaufelrad zu einer Hälfte der Wasserströmung ausgesetzt ist.

Bei derartigen Geschwindigkeitsmessern ist es bekannt, das Schaufelrad mit geraden radial gerichteten Schaufeln mit in Anströmrichtung etwa rechteckigem Querschnitt auszubilden. Dabei kommt es an der
Anströmseiten der Schaufeln zu turbulenten Verwirbelungen, die bei hohen Strömungsgeschwindigkeiten
sogar einen solchen Unterdruck erzeugen, daß es zu
Kavitation und zu Zerstörungen an der Schaufel kommt.
Diese Verwirbelungen beeinträchtigen wesentlich eine
gleichmäßige Reaktion des Schaufelrades auf die Wasserströmung, da ihre Stärke sowohl von der jeweiligen
Stellung der einzelnen Schaufeln zur Strömungsrichtung als auch von der jeweiligen Strömungsgeschwindigkeit abhängt. Somit ist keine einwandfreie Geschwindigkeitsmessung möglich.

Aufgabe der Erfindung ist es, einen Geschwindigkeitsmesser nach dem Oberbegriff zu schaffen, der eine hohe Meßgenauigkeit besitzt.

Diese Aufgabe wird erfindungsgemäß dadurch gelöst, daß die Schaufeln des Schaufelrades an ihrer Abströmseite mit einem konvexen, stromlinienförmigen Tragflügelprofil ausgebildet sind. Diese Ausbildung führt bei den verschiedensten Strömungsgeschwindigkeiten zu einer laminaren Strömung auf der Abströmseite der Schaufeln, so daß die Messung mit einer hohen störungsfreien Meßgenauigkeit erfolgt. Die hohe Meßgenauigkeit wird weiterhin mit einer erhöhten Ansprechempfindlichkeit versehen, da das Tragflächenprofil mit seiner gegenüber der Anströmfläche größeren Abströmfläche einen turbulenzfreien Sog auf der Abströmseite erzeugt, der zusätzlich zu dem Anströmimpuls auf der Anströmseite auf die Schaufeln des Schaufelrades wirkt. Dies führt zu einer hohen Anlaufempfindlichkeit und somit selbst bei geringen Geschwindigkeiten schon zu einer genauen Messung. Erreichte man bei bekannten Geschwindigkeitsmessern eine halbwegs verwendbare Messung erst bei einer Geschwindigkeit von etwa 1,5 Knoten so hat man nun schon bei etwa 0,2 bis 0,4 Knoten genaue Meßwerte.

Um die Ansprechempfindlichkeit des Geschwindigkeitsmessers bei gleichzeitiger Vermeidung von Turbulenzen zu erhöhen, kann die Anströmseite der Schaufeln mit einem konkaven, stromlinienförmigen Tragflügelprofil ausgebildet sein.

Ebenfalls zur Vermeidung der Turbulenzbildung am Schaufelrad und damit einer Störbeeinflussung der Messung dient es, wenn die radial nach außen gerichtete Stirnseite der Schaufeln mit einem in die Abströmseite übergehenden Radius ausgebildet ist, wobei es besonders günstig ist, wenn das stromlinienförmige Tragflügelprofil der Abströmseite sich von der Abströmseite bis zur radial nach außen gerichteten Vorderkante der Schaufeln erstreckt.

Um nicht nur an der Stirnseite sondern auch an den Seitenbereichen der Schaufeln eine Turbulenzbildung zu vermeiden, können die Schaufeln in Anströmrichtung gesehen, eine etwa halbkreisförmige Kontur besitzen. Ausreichend um eine wesentliche Störbeeinflussung zu vermeiden ist es schon, wenn die halbkreisförmige Kontur an ihren Seitenbereichen abgeflacht ist, da in diesen Bereichen wegen des relativ geringen Radiuses zur Achse keine hohen Umlaufgeschwindigkeiten mehr vorhanden sind.

Ragt die nicht der Wasserströmung ausgesetzte Hälfte des Schaufelrades in eine Gehäusekammer deren Wandung konstanten Abstand zur Umlaufkontur des Schaufelrades besitzt, so erhält man auch in diesem Bereich ein gleichmäßiges laminares Durchströmen des Wassers, was die positiven Eigenschaften des Geschwindigkeitsmessers noch unterstützt.

Werden die Drehbewegungen des Schaufelrades auf induktivem Weg z.B. durch einen im Gehäuse des Geschwindigkeitsmessers angeordneten Hallsensor erfaßt, ist es von Vorteil, wenn Dauermagnete vollkommen eingeschlossen in Schaufeln des Schaufelrades angeordnet sind. Dadurch entstehen keine Kanten oder hervorstehende Grate an der Oberfläche des Schaufelrades, die zu störenden Wirbelbildungen führen könnten. Dazu besteht eine einfach herstellbare Ausbildung darin, daß das Schaufelrad mehrteilig zusammensetzbar und mit im auseinandergenommenen Zustand offenen, im zusammengesetzten Zustand geschlossenen Ausnehmungen für die Dauermagnete ausgebildet ist, wobei vorzugsweise das Schaufelrad aus zwei spiegelgleichen Teilen besteht, deren Verbindungsebene die mittige Schnittebene senkrecht zur Achse ist. Dies ermöglicht es eine sehr dünne Wandung an der radial nach außen gerichteten Seite der Ausnehmungen vorzusehen, so daß praktisch keine Beeinflussung des Magnetfeldes erfolgt. Zur Vermeidung von Problemen beim lagerichtigen Einbau der mit nur geringer Größe ausgebildeten Magnete könnnen diese im unmagnetisierten Zustand eingebaut und nach vollkommener Herstellung des Schaufelrades magnetisiert werden.

Zu einer leichten Montage dient es dabei, wenn an der Verbindungsebene des einen Teils hervorstehende, in entsprechende Ausnehmungen des anderen Teils eingreifende Justieransätze ausgebildet sind.

Sind die als Kunststoffspritzgußteil ausgebildeten Teile des Schaufelrades z.B. durch Ultraschall zusammen-

- 5 -

geschweißt, so erhält man auf einfache Weise eine glatte Oberfläche an der Schnittfläche der beiden Teile des Schaufelrades.

Durch die Lagerung des Schaufelrades an zwei Lagerstellen auf der Achse, die an den axialen Seitenbereichen des Schaufelrades ausgebildet sind, ist ein Kippen des Schaufelrades auf der Achse innerhalb des Lagerspiels stark eingeschränkt. Damit ist nicht nur der zu überwindende Lagerwiderstand sondern auch eine Spaltdickenveränderung zwischen dem Schaufelrad und der Wandung der Gehäusekammer stark reduziert. Eine Beeinflussung der Strömungsverhältnisse in diesem Bereich ist somit weitgehend vermieden.

Ein Ausführungsbeispiel der Erfindung ist in der Zeichnung dargestellt und wird im folgenden näher beschrieben. Es zeigen

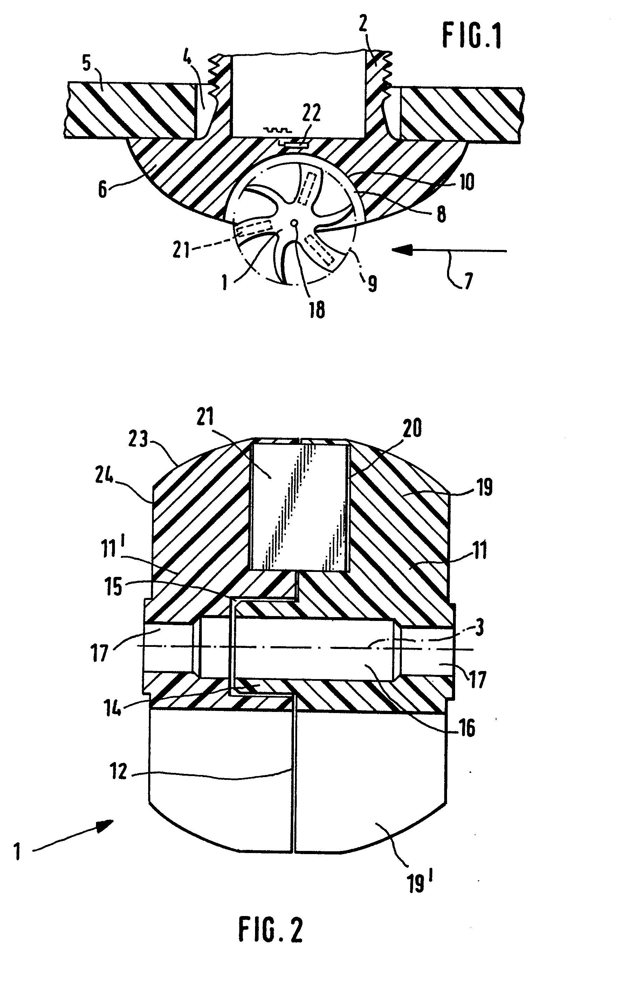

Figur 1   einen Querschnitt eines erfindungsgemäßen Geschwindigkeitsmessers,

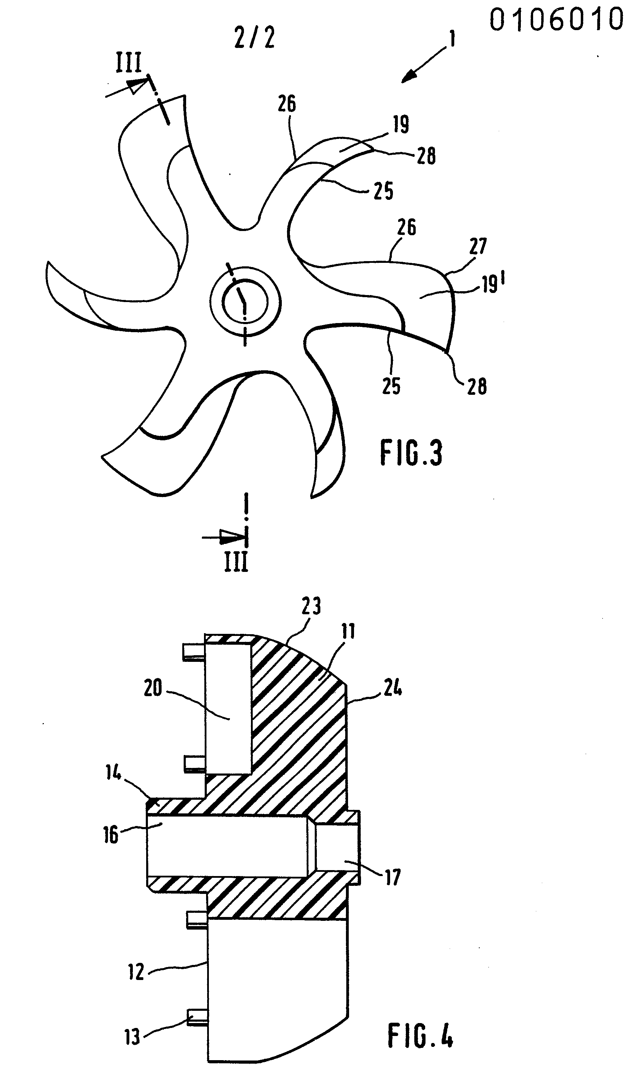

Figur 2   einen Querschnitt des Schaufelrades nach Figur 3 entlang der Linie III-III,

Figur 3   das Schaufelrad in der Seitenansicht,

Figur 4   eine Hälfte des Schaufelrades nach Figur 3 im Schnitt entlang der Linie III-III.

Der dargestellte Geschwindigkeitsmesser besitzt ein Schaufelrad 1, das an einem Gehäuse 2 um eine Achse 3
drehbar gelagert ist. Das Gehäuse 2 ragt durch eine
Ausnehmung 4 des Bodens 5 eines Wasserfahrzeuges
und besitzt wasserseitig einen Lagerkörper 6 mit
einer stromlinienförmigen, nach der Strömungsrichtung 7 ausgerichteten Form.

Der Bereich des Lagerkörpers 6, an dem das Schaufelrad 1 angeordnet ist, ragt so weit vom Behälter 5 weg,
daß sich das Schaufelrad 1 außerhalb der turbulenten
Grenzschicht entlang des Bodens 5 des Wasserfahrzeugs
befindet. Dadurch und durch die laminare Umströmung
des Lagerkörpers 6 aufgrund seiner Stromlinienform,
sind turbulenzbedingte Beeinflussungen der Geschwindigkeitsmessung vermieden.

Das Schaufelrad 1 ist nur zur Hälfte der Wasserströmung ausgesetzt, während die andere Hälfte des Schaufelrades 1 in eine Gehäusekammer 8 des Lagerkörpers 6
ragt. Diese Gehäusekammer 8 ist der Umlaufkontur 9
des Schaufelrades 1 so angepaßt, daß zwischen dieser
Umlaufkontur 9 und der Wandung 10 der Gehäusekammer 8
ein gleichbreiter Spalt relativ geringer Größe gebildet ist. Dies führt zu laminaren Strömungsverhältnissen in der Gehäusekammer 8.

Das Schaufelrad 1 ist aus zwei etwa gleichen Teilen 11,
11' zusammengesetzt. Dabei greifen von der Verbindungsebene 12 des einen Teils 11 hervorstehende Justieransätze 13 in entsprechende Ausnehmungen des anderen
Teils 11' ein.

Zur Zentrierung der beiden Teile 11, 11' zueinander dient ein zentrischer hervorstehender Zapfen 14, der in eine entsprechende zentrische Bohrung 15 in Teil 11' eingreift.

Die am Schaufelrad 1 durchgehend ausgebildete Lagerbohrung 16 besitzt an ihrem mittleren Bereich einen vergrößerten Durchmesser, so daß die Lagerstellen 17, an denen der Lagerzapfen 18 in Anlage ist, nur in den axialen Seitenbereichen des Schaufelrades 1 bestehen. Dies führt zu einer Vermeidung des seitlichen Kippens des Schaufelrades 1 auf dem Lagerzapfen 18.

In drei der sechs Schaufeln 19, 19' des Schaufelrades 1, die dazu mit in Umfangsrichtung größerer Breite ausgeführt sind, sind zur Verbindungsebene der beiden Teile 11, 11' hin offene Ausnehmungen 20 ausgebildet. Diese Ausnehmungen 20 dienen zur vollkommen eingeschlossenen Aufnahme von radial magnetisierten Dauermagneten 21, deren Magnetfeld einen im Gehäuse 2 angeordneten Hall-Sensor 22 beeinflussen.

Die von der Gehäusekammer 8 getrennte Anordnung des Hallsensors 22 im Gehäuse 2 ermöglicht es zum einen ohne Abdichtungsprobleme den Hallsensor 22 mit einer Elektronik und einer Anzeige zu verbinden. Zum anderen sind keine die Strömung ungünstig beeinflussenden Kanten und Ausnehmungen in der Wandung 10 erforderlich.

Die Teile 11, 11' des Schaufelrades 1, die Kunststoffspritzgußteile sind, werden nach dem Einsetzen der Dauermagnete 21 ineinandergesteckt und durch Ultraschall miteinander verschweißt. Dadurch werden Kanten und Grate vermieden.

Die Schaufeln 19, 19' besitzen eine halbkreisförmige Kontur 23 mit abgeflachten Seitenbereichen 24.

Die Anströmseiten 25 der Schaufeln 19, 19' sind mit einem konkaven stromlinienförmigen Tragflügelprofil ausgebildet. Dabei führt die konkave Form zur Verstärkung des von der Wasserströmung auf das Schaufelrad 1 ausgeübten Impulses. Das stromlinienförmige Tragflügelprofil erzeugt laminare Strömungsverhältnisse an der Anströmseite 25.

Die Abströmseite 26, deren Fläche größer ist als die der Anströmseite 25, ist ebenfalls mit einem stromlinienförmigen Tragflügelprofil ausgebildet, das aber konvex ist.

Auch hier dient das Tragflügelprofil zur Erzeugung laminarer Strömungsverhältnisse. Die größere Fläche der Abströmseite 26 gegenüber der Anströmseite 25 führt dazu, daß auf der Abströmseite 26 ein Sog entsteht, der so groß ist, daß etwa 80 % der am Schaufelrad 1 angreifenden Kräfte durch den Sog und 20 % der Kräfte durch den an der Anströmseite 25 angreifenden Strömungsimpuls aufgebracht werden. Dies führt zu einer hohen Ansprechempfindlichkeit des Geschwindigkeitsmessers, so daß schon bei geringen Geschwindigkeiten eine genaue Messung erfolgen kann.

Die radial nach außen gerichteten Stirnseiten der
Schaufeln 19' sind mit einem in die Abströmseite 26
übergehenden Radius 27 ausgebildet, während bei
den Schaufeln 19 das stromlinienförmige Tragflügelprofil sich von der Abströmseite 26 bis zur radial
nach außen gerichteten Vorderkante 28 der Schaufeln
19 erstreckt. Beide Maßnahmen dienen zur Vermeidung
turbulenter Strömungsverhältnisse.

Da alle der Wasserströmung ausgesetzten Teile des Geschwindigkeitsmessers weitgehend stromlinienförmig
ausgebildet sind, kommt es zu keinen wesentlichen
Turbulenzen, wodurch die Geschwindigkeitsmessung mit
hoher Genauigkeit durchgeführt werden kann.

-1-

0106010

VDO Adolf Schindling AG

Gräfstraße 103
6000 Frankfurt/Main

G-S Kl-kl / V 1944

13. Okt. 1982

<u>Patentansprüche</u>

1. Geschwindigkeitsmesser für Wasserfahrzeuge, mit einem Schaufelradgeber, dessen auf einer Achse drehbar gelagertes Schaufelrad zu einer Hälfte der Wasserströmung ausgesetzt ist, <u>dadurch gekennzeichnet</u>, daß die Schaufeln (19, 19') des Schaufelrades (1) an ihrer Abströmseite (26) mit einem konvexen stromlinienförmigen Tragflügelprofil ausgebildet sind.

2. Geschwindigkeitsmesser nach Anspruch 1, <u>da- durch gekennzeichnet</u>, daß die Anströmseite (25) der Schaufeln (19, 19') mit einem konkaven stromlinienförmigen Tragflügelprofil ausgebildet ist.

3. Geschwindigkeitsmesser nach einem der vorher- gehenden Ansprüche, <u>dadurch gekennzeichnet,</u> daß die radial nach außen gerichtete Stirnseite der Schaufeln (19') mit einem in die Abströmseite (26) übergehenden Radius (27) ausgebildet ist.

4. Geschwindigkeitsmesser nach einem der vorhergehenden Ansprüche, dadurch gekennzeichnet, daß das stromlinienförmige Tragflügelprofil der Abströmseite (26) sich von der Abströmseite (26) bis zur radial nach außen gerichteten Vorderkante (28) der Schaufeln (19) erstreckt.

5. Geschwindigkeitsmesser nach einem der vorhergehenden Ansprüche, dadurch gekennzeichnet, daß die Schaufeln (19, 19') in Anströmrichtung (7) gesehen eine etwa halbkreisförmige Kontur (23) besitzen.

6. Geschwindigkeitsmesser nach Anspruch 5, dadurch gekennzeichnet, daß die halbkreisförmige Kontur (23) an ihren Seitenbereichen (24) abgeflacht ist.

7. Geschwindigkeitsmesser nach einem der vorhergehenden Ansprüche, dadurch gekennzeichnet, daß die nicht der Wasserströmung ausgesetzte Hälfte des Schaufelrades (1) in eine Gehäusekammer (8) ragt, deren Wandung (10) konstanten Abstand zur Umlaufkontur (9) des Schaufelrades (1) besitzt.

8. Geschwindigkeitsmesser nach einem der vorhergehenden Ansprüche, dadurch gekennzeichnet, daß Dauermagnete (21) vollkommen eingeschlossen in Schaufeln (19') des Schaufelrades (1) angeordnet sind.

9.  Geschwindigkeitsmesser nach Anspruch 8, _dadurch gekennzeichnet_, daß das Schaufelrad (1) mehrteilig zusammensetzbar und mit im auseinandergenommenen Zustand offenen, im zusammengesetzten Zustand geschlossenen Ausnehmungen (20) für die Dauermagnete (21) ausgebildet ist.

10. Geschwindigkeitsmesser nach Anspruch 9, _dadurch gekennzeichnet_, daß das Schaufelrad (1)aus zwei spiegelgleichen Teilen(11, 11') besteht, deren Verbindungsebene die mittige Schnittebene senkrecht zur Achse (3) ist.

11. Geschwindigkeitsmesser nach Anspruch 10, _dadurch gekennzeichnet_, daß an der Verbindungsebene (12) des einen Teils (11) hervorstehende, in entsprechende Ausnehmungen des anderen Teils (11') eingreifende Justieransätze (13) ausgebildet sind.

12. Geschwindigkeitsmesser nach Anspruch 9, _dadurch gekennzeichnet_, daß die als Kunststoffspritzgußteile ausgebildeten        Teile (11, 11') des Schaufelrades (1) zusammengeschweißt sind.

13. Geschwindigkeitsmesser nach einem der vorhergehenden Ansprüche, _dadurch gekennzeichnet_, daß das Schaufelrad (1) an zwei Lagerstellen (17) auf der Achse (3) gelagert ist, die an den axialen Seitenbereichen des Schaufelrades (1) ausgebildet sind.

0106010

FIG.1

FIG.2

0106010

FIG.3

FIG.4

**Europäisches Patentamt**

**EUROPÄISCHER RECHERCHENBERICHT**

0106010

Nummer der Anmeldung

EP 83 10 4877

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-3 457 782 (MAEDER u.a.) <br> * Spalte 1, Zeilen 14-22; Figur 2 * | 1-5 | G 01 P 5/07 |
| Y | US-A-2 518 611 (GEIGER) <br><br> * Spalte 1, Zeilen 5-20; Figuren 1-4 * | 1,6-8, 13 | |
| A | DE-C- 701 157 (WASSERMETER) <br> * Seite 1, Zeilen 1-46; Figuren 1,2 * | 1,2,4 | |
| A | DE-C- 728 552 (AUDE & REIPERT) <br><br> * Seite 2, Zeilen 72-100; Figuren 1,2 * | 1,2,4, 7,9,10 ,13 | |
| A | US-A-3 706 224 (OVERS) <br> * Insgesamt; Figuren 3,4 * | 1,5,6 | |
| A | FR-A-2 019 056 (RHODES & SON LTD.) <br> * Seite 2, Zeilen 33-40; Figuren 3,4 * | 7-9,11 -13 | |

**RECHERCHIERTE SACHGEBIETE (Int. Cl. 3)**

G 01 P
G 01 F

Der vorliegende Recherchenbericht wurde für alle Patentansprüche erstellt.

| Recherchenort | Abschlußdatum der Recherche | Prüfer |
|---|---|---|
| DEN HAAG | 24-01-1984 | HANSEN P. |